# EUROPEAN PATENT APPLICATION

(11) **EP 2 278 468 A2**
(43) Date of publication of application: **26.01.2011**
(21) Application number: 10166770.7
(22) Date of filing: 22.06.2010
(51) Int. Cl.: G06F 11/34

(54) **System and method for tracking application usage**

(30) Priority: 22.06.2009 US 219058 P
(71) Applicant: Uniloc USA, Inc., Irvine, CA 92612 (US)
(72) Inventor: Etchegoyen, Craig Stephen, Irvine, CA 92612 (US); Mordetsky, Joseph Martin, Irvine, CA 92606 (US)
(74) Representative: Casbon, Paul Richard

(57) **Abstract**

A system for tracking the use of an application on a computing device comprises a data collection server. In response to a communication link being available between the data collection server and the computing device, the data collection server is configured to: (1) receive from the computing device, via the communication link, data including (a) an application identifier identifying the application, (b) a device identifier identifying the computing device, and (c) an instrumentation call identifier identifying an instrumentation call performed by the application; (2) access a database storing previously received application identifiers, device identifiers, and instrumentation call identifiers; and (3) update the database to include the received data. A method for tracking the use of an application on a computing device is also disclosed.

## Description

This application claims priority to U.S. Provisional Application 61/219,058, which was filed June 22, 2009, and which is fully incorporated herein by reference.

### BACKGROUND OF THE INVENTION

### Field of the Invention

The field of the present invention is systems and methods for tracking application usage, and more particularly, to tracking application usage patterns on a user's computing device.

### Description of the Related Art

Currently, there exists no reliable method to track actual application usage patterns across the install base for the application. The closest that a software developer can come to tracking and understanding actual application usage patterns is through the use of monitored test groups and statistical analysis of the patterns that are observed within the test groups. While statistics resulting from test groups can provide valuable information, the limited nature of test groups invariably leaves some meaningful data undiscovered. This undiscovered data could, however, be uncovered and utilized through a reliable method for collecting application usage data directly from a significant portion of the users that make up the install base for the application.

### SUMMARY OF THE INVENTION

The present invention is directed toward a system and method for tracking application usage on a computing device. Through a communication link being available between the computing device and a data collection server, usage of the application on the computing device is tracked through instrumentation calls performed by the application. By tracking and correlating these instrumentation calls with other data relating to the application and the computing device, a more detailed picture of usage of the application is enabled through data analysis techniques.

In a first separate aspect of the present invention, with respect to the system, in response to the communication link being available between the data collection server and the computing device, the data collection server is configured to: (1) receive from the computing device, via the communication link, data including (a) an application identifier identifying the application, (b) a device identifier identifying the computing device, and (c) at least one instrumentation call identifier identifying an instrumentation call performed by the application; (2) access a database storing previously received application identifiers, device identifiers, and instrumentation call identifiers; and (3) update the database to include the received data.

In a second separate aspect of the present invention, building upon the first separate aspect, to update the database, the data collection server is further configured to: compare the received device identifier and application identifier with the device identifiers and application identifiers, respectively, stored within the database; update records within the database to reflect the received data where at least one of the received device identifier and application identifier is already stored within the database; and add a record to the database to reflect the received data where neither of the received device identifier and application identifier is already stored within the database.

In a third separate aspect of the present invention, building upon the first separate aspect, the data received may include additional information useful in tracking application usage through subsequent database analysis. As one option, the application identifier may include at least one of a product identifier, an application signature, an application version number, and a license identifier. As another option, the instrumentation call identifier may include a time stamp indicating an instrumentation call time.

In a fourth separate aspect of the present invention, with respect to the method, following establishment of the communication link between the data collection server and the computing device, the data collection server receives data from the computing device via the communication link. The data includes: (a) an application identifier identifying the application, (b) a device identifier identifying the computing device, and (c) an instrumentation call identifier identifying an instrumentation call performed by the application. A database storing previously received and associated application identifiers, device identifiers, and instrumentation call identifiers is then accessed and updated to include the received data.

In a fifth separate aspect of the present invention, building upon the fourth separate aspect, the database is queried to identify device identifiers associated with one or more different types of instrumentation calls. As one example, the instrumentation calls associated with a single device may be analyzed over a period of time to identify any potential usage patterns. As another example, the instrumentation calls associated with multiple device identifiers may be analyzed to identify any potential usage patterns. This may be further enhanced if geographical location information is included in the device identifier, as this additional information enables analysis based upon a selected geographical region. Further enhancement of the analysis may be obtained by including details available within the application identifier, insofar as such details are available. The details within the application identifier may include a product identifier, an application signature, an application version, a license identifier, among other things.

In a sixth separate aspect of the present invention, any of the foregoing aspects may be employed in combination. Aspects indicated for the system may be incorporated into the method, just as aspects indicated for the method may be incorporated into the system.

Accordingly, an improved system and method for tracking application usage on a computing device are disclosed. Advantages of the improvements will appear from the drawings and the description of the preferred embodiment.

### BRIEF DESCRIPTION OF THE DRAWINGS

In the drawings, wherein like reference numerals refer to similar components:

FIG. 1 is a block diagram showing a system for auditing software usage on a computing device according to one embodiment of the invention.

FIG. 2 is a block diagram representing memory allocation for a device identifier for use in accordance with the present invention.

FIG. 3 is a flowchart illustrating a software process for collection of application usage data according to another embodiment of the present invention.

### DETAILED DESCRIPTION

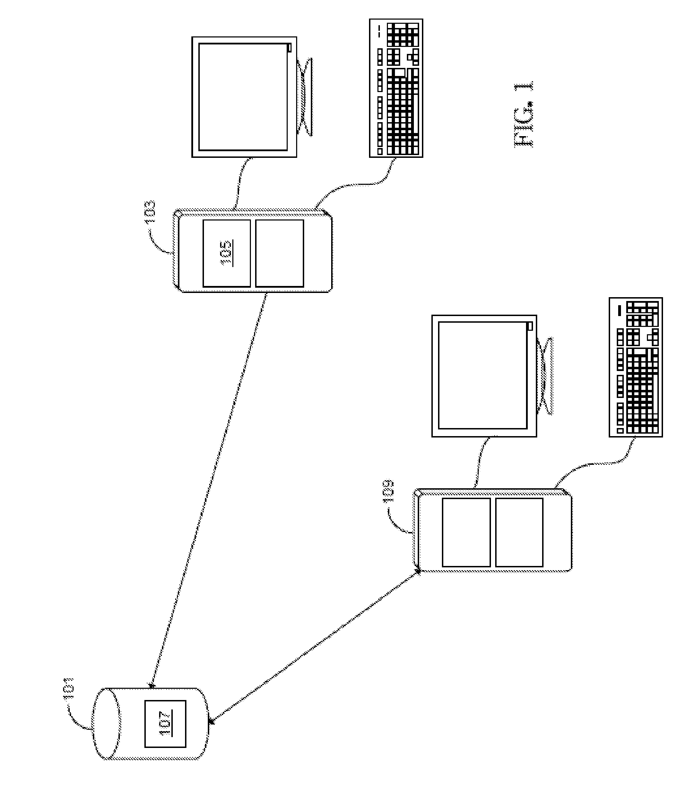

Turning in detail to the drawings, FIG. 1 illustrates a data collection server 101 which receives tracking data from the computing device 103 relating to the use of application on the computing device 103. The computing device 103 may be any machine or device capable of communication with a computer network, such as a game console, a personal computer, a server computer, a laptop computer, a tablet computer, a personal digital assistant, a mobile phone, a wireless communication device, an onboard vehicle computer, and the like. The computing device 103 includes an application 105 which is run interactively by the user, and about which tracking data is collected. In some instances, the application 105 requires a license to be authorized for use. The application 105 includes a tracking routine which collects information about usage of the application, about the application itself, and about the computing device. The tracking routine generates tracking data from the collected information, establishes the communication link with the data collection server 101, and transmits the tracking data. Alternatively, the computing device 103 may include a separate tracking and data collection application to perform these functions. However, there is a risk that a separate monitoring application might not be active on the computing device while the application being tracked is being used, thereby causing loss of tracking data. For this reason, incorporating a tracking routine into the application 105 is preferred.

The tracking data is transferred via a communication link established between the computing device 103 to the data collection server 101 and maintained as records within the database 107. As shown, the database 107 resides on the data collection server 101, however, in practice the database may reside on any machine, on any recordable medium, or be resident within any memory space to which the data collection server 101 is communicably connected, either directly or indirectly. An access device 109 communicates with the data collection server 101 through a separate communication link to enable queries of the database 107. While a single computing device is shown, the data collection server is configured to establish communication links with multiple computing devices so that tracking data from each computing device can be received and recorded, thus enabling tracking of the application within substantially the entire install base for that application.

The communication link may take any form desired. For example, the communication link may be established over a private communications network or over a public communications network, the Internet being an example of the latter. Also, the communication link may be established directly or indirectly, and the link may be permanent or transitory. Most typically, the communication link is established as needed, or at desired intervals of time, data accumulation, or by any other metric, between the data collection server 101 and the computing device 103 via the Internet or other wide area network (WAN). When time or data accumulation are used as the basis for when to establish the communication link, the interval is preferably selected to limit the size of the transmitted data based upon the throughput capacity of the communication link, so that the data transmission process remains substantially transparent to the user.

Following receipt of the tracking data over the communication link, the database 107 is accessed to determine whether either of the device identifier or the application identifier, or any of the components of these identifiers, are currently stored as part of records within the database. The database 107 stores records of previously received tracking data, against which the received tracking data is compared. If no matching records are found with reference to either of the device identifier, the application identifier, or any of the components thereof in the received tracking data, then a new record is entered into the database 107 reflecting the received tracking data. If one or more of the device identifier, the application identifier, or any of the components thereof in the received tracking data are currently included as part of existing records within the database 107, then the currently existing record, or records, as appropriate, are updated to include the received tracking data.

The tracking data includes at least an application identifier, a device identifier, and an instrumentation call identifier. The application identifier includes at least a product identifier - an application signature may also be included. The product identifier identifies the title of the application being used on the computing device 103 by title name, product number, product key, or any other appropriate data that indicates the specific application title. The application signature identifies the application being used through creation of an application signature on the computing device. This application signature may then be compared against application signatures on file by the application developer, manufacturer, and/or owner, to identify the application title being used on the computing device. This additional identification of the application title may serve as a cross check on the product identifier. In the event that the application signature received in the tracking data does not match any application signature on file, this may be an indicator that the application being used on the is an unauthorized copy of the application. In such instances, the tracking data may still be added to the database 107 so that usage of the unauthorized copy can also be tracked, along with any increase of usage of the unauthorized copy among other users.

The application signature may be generated in any number of ways, including through the use of commonly used hash functions, checksum functions, software fingerprint functions, and the like. Such functions, along with methods of implementing such functions to produce software signatures (also sometimes referred to as "fingerprints"), are well known to those of skill in the relevant arts, and as such are not discussed in further detail herein.

The application identifier may also include information identifying the version number of the application being used, a license identifier, and/or a license number. Inclusion of the version number enables tracking of the different application versions currently in use by users of the application. Inclusion of the version number also enables determination when and if a user reverts to a previous version of the application following an update. The license identifier or license number may be included as part of the application identifier following licensing and/or registration of the application by the user on the computing device.

The instrumentation call identifier serves to identify different types of instrumentation calls that occur during a user's regular use of the application. An instrumentation call, for purposes of this description, is any identifiable activity performed by or with the application on a user's computing device that serves to call. Such functions may include system calls, subroutine calls, library calls, registry calls, device calls, application programming interface (API) calls, network calls, or any other activity of the application on the user's computing device which is desirable to track. For example, it may be desirable to track how often a user access the help feature included with an application, or alternatively how often a user accesses an online help feature. As another example, it may be desirable to track how often the application accesses a third party library during use, or how often a particular API is called, or even how often the user accesses a particular feature of the application. By gathering such data and accumulating it from users across the install base, an analysis of the data can aid the developer in including more frequently used features, discarding little used features, or even generally speeding up the application based upon the types of application features that are most frequently used across the install base.

Each of the activities described above which results in collection of data relating to an instrumentation call may be identified and tracked in any desirable manner according to the preferences of a particular implementation. Further, the reporting of activities need not occur in real time if not desired or efficient, or no communication link can be established with the data collection server. Rather, it may be more efficient to queue and store recorded and time stamped instrumentation calls for transmission at a later time when a communication link can be established.

For further delineation of application usage, the instrumentation call identifier may include a time stamp to indicate the time that the instrumentation call occurred on the user's computing device. Inclusion of a time stamp enables differentiation between separate occurrences of identical instrumentation calls on an individual computing device, thereby enhancing the available data for later analysis.

Depending upon the circumstances of usage for the application, the tracking data, especially including the tracking identifier and the instrumentation call identifier, may also include additional information to track other activity of the application beyond those which are expressly described to herein.

The tracking routine, or alternatively a separate tracking application, may include a device identifier routine that collects information regarding computing device by checking a number of parameters which, collectively, are expected to uniquely identify computing device. The description below presumes that the application includes a tracking routine which generates the device identifier. The parameters checked may include, for example, hard disk volume name, user name, device name, user password, hard disk initialization date, etc. The collected information includes information that identifies the hardware on which the application is used, such as, for example, CPU number, or unique parameters associated with the firmware in use. The system information may further include system configuration information, such as amount of memory, type of processor, software or operating system serial number, etc. The parameters checked may also include, alternatively or in addition, virtual machine specifications. Examples of virtual machine specifications include, but are not limited to, information relating to virtual processors, virtual BIOS, virtual memory, virtual graphics, virtual IDE drives, virtual SCSI devices, virtual PCI slots, virtual floppy drives, virtual serial (COM) ports, virtual parallel (LPT) ports, virtual keyboard, virtual mouse and drawing tablets, virtual Ethernet card, virtual networking, virtual sound adapter, etc.

Based on the information collected from the computing device, the routine generates a device identifier that uniquely identifies the user's computer. The device identifier may be stored in a hidden directory of the device, and/or it may be generated each time prior to the occurrence of a data transmission, or at any other desired time. The device identifier, by virtue of the application being used on the computing device or otherwise having access to the computing device's hardware and file system, is generated by a process which operates on data indicative of the computing device's configuration and hardware.

The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The application routine that generates the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured device identifier routine operating or otherwise having had access to the same computing device for which the device identifier was first generated. Conversely, each identifier, again to a very high degree of certainty, can be successfully reproduced by the suitably configured device identifier routine operating or otherwise having access to the same computing device on which the identifier was first generated.

The device identifier routine may operate by performing a system scan to determine a present configuration of the computing device. The routine may then select the machine parameters to be used as input for generating the unique device identifier. Selection of parameters may vary depending on the system configuration. Once the parameters are selected, the routine may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

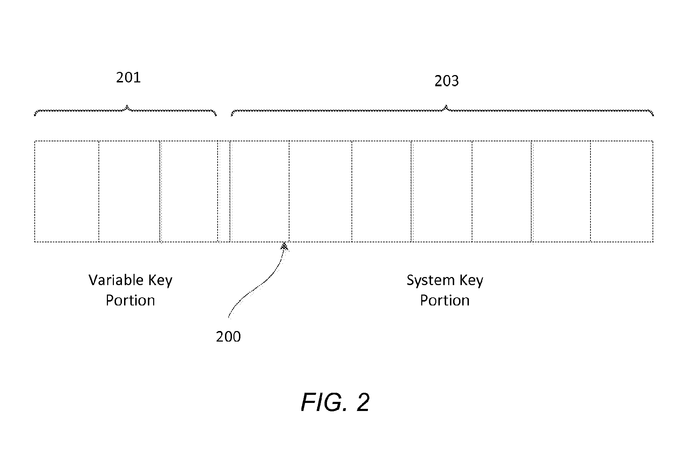

FIG. 2 illustrates an exemplary embodiment of a device identifier 200, which may include two components - namely, a variable key portion 201 and a system key portion 203. The variable key portion 201 may be generated by reference to a variable platform parameter, such as via reference to system time information, although other parameters which are variable may be utilized in other embodiments. The system key portion 203 may include the above described parameters expected to be unique to the computing device on which the application is used, such as, for example, hard disk volume name, user name, computer name, user password, hard disk initialization date, or combinations of the parameters described above. The variable key portion 201 and/or the system key portion 203 may be combined with the IP address and/or other platform parameters of the computing device. The device identifier, or portions thereof, may be encrypted to add an additional layer of specificity and security.

The application may actively monitor itself to determine when a reportable instrumentation call has occurred, much as a separate tracking application would, and activate the tracking routine upon occurrence of each instrumentation call. If the application is configured thusly, it sets an instrumentation call flag, which indicates the type of instrumentation call, and may also indicate the time of occurrence, to facilitate the monitoring process. Thereafter, the tracking routine, or the separate tracking application, can detect and respond appropriately to the flag and the data included therewith. Alternatively, the application may be coded to activate the tracking routine upon occurrence of a reportable instrumentation call, passing data related to the instrumentation call to the tracking routine. Other alternative methods for tracking and gathering the application usage data may also be employed.

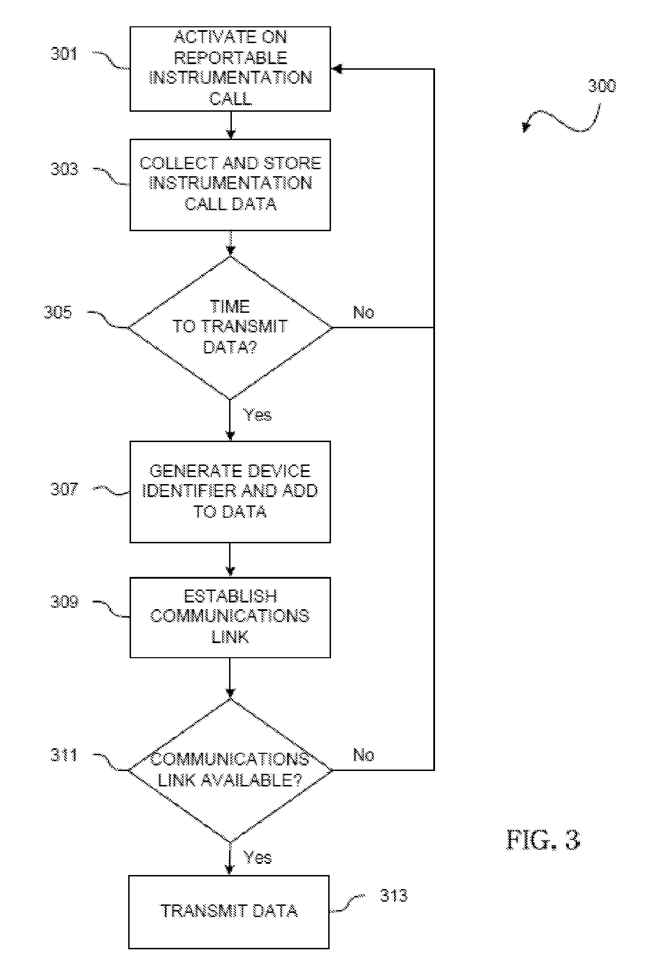

FIG. 3 illustrates the process 300 of the tracking routine once it has been activated 301, regardless of the manner in which it is activated. Once activated, the tracking routine collects and stores 303 data relating to the instrumentation call. In the event that a separate tracking application is used, at this stage the data would also include the application identifier to indicate which application made the instrumentation call. Following each instance of collecting data on an instrumentation call, the tracking routine determines 305 if a data transmission should be made. As indicated above, this determination may be based upon the time since the last transmission, on the amount of accumulated data, or on any other desirable criteria. If the tracking routine determines that a data transmission is not currently required, then it ceases processing and waits for the next activation. Otherwise, the tracking routine generates 307 the device identifier, in the manner described above, and adds the device identifier to the data. Once the tracking data is prepared for transmission, the routine attempts to establish 309 a communication link with the data collection server. If the communication link is available 311, then the tracking data is transmitted to the data collection server 313. Otherwise, the tracking data remains stored on the computing device, and the tracking routine ceases processing and waits for the next activation. As an alternative, instead of ceasing processing and waiting, the tracking routine may continue making attempts to establish a communication link and resend the tracking data. These subsequent attempts may be made at any interval desired, whether regular or irregular. As a further alternative, a combination of these two techniques may be employed, where a limited number of initial attempts are performed to establish the communications link, and failure to establish the communications link after exhaustion of those attempts results in the tracking routine ceasing processing and waiting for the next activation.

Thus, a system and a method for tracking application usage on a computing device are disclosed. While embodiments of this invention have been shown and described, it will be apparent to those skilled in the art that many more modifications are possible without departing from the inventive concepts herein. The invention, therefore, is not to be restricted except in the spirit of the following claims.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disk (CD), digital versatile disk (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system for tracking the use of an application on a computing device, the system comprising:
a data collection server which, in response to a communication link being available between the data collection server and the computing device, is configured to:
receive from the computing device, via the communication link, data including (a) an application identifier identifying the application, (b) a device identifier identifying the computing device, and (c) at least one instrumentation call identifier identifying an instrumentation call performed by the application;
access a database storing previously received application identifiers, device identifiers, and instrumentation call identifiers; and
update the database to include the received data.

2. The system of claim 1, wherein the application identifier comprises at least one of a product identifier, an application signature, an application version number, and a license identifier.

3. The system of claim 1, wherein the instrumentation call identifier includes a time stamp indicating an instrumentation call time.

4. The system of claim 1, wherein the instrumentation call comprises one of a device call, a subroutine call, a library call, and a registry call.

5. The system of claim 1, wherein the device identifier is formed by at least one irreversible transformation.

6. The system of claim 1, wherein the device identifier indicates a geographical location of the computing device.

7. The system of claim 1, wherein, to update the database, the data collection server is further configured to:
compare the received device identifier and application identifier with the device identifiers and application identifiers, respectively, stored within the database;
update records within the database to reflect the received data where at least one of the received device identifier and application identifier is already stored within the database; and
add a record to the database to reflect the received data where neither of the received device identifier and application identifier is already stored within the database.

8. A method for tracking the use of an application on a computing device, the method comprising:
establishing a communication link between a data collection server and the computing device;
receiving at the data collection server from the computing device, via the communication link, data including (a) an application identifier identifying the application, (b) a device identifier identifying the computing device, and (c) at least one instrumentation call identifier identifying an instrumentation call performed by the application;
accessing a database storing previously received and associated application identifiers, device identifiers, and instrumentation call identifiers; and
updating the database to include the received data.

9. The method of claim 8, wherein the application identifier comprises at least one of a product identifier, an application signature, an application version number, and a license identifier.

10. The method of claim 8, wherein the instrumentation call identifier includes a time stamp indicating an instrumentation call time.

11. The method of claim 8, wherein the instrumentation call comprises one of a device call, a subroutine call, a library call, and a registry call.

12. The method of claim 8, wherein establishing the communication link includes establishing the communication link following accumulation of a predetermined number of instrumentation call identifiers.

13. The method of claim 8, wherein establishing the communication link includes establishing the communication link following a predetermined interval.

14. The method of claim 8, wherein establishing the communication link includes establishing the communication link following a predetermined number of instrumentation calls.

15. The method of claim 8, further comprising querying the database to identify and analyze the instrumentation calls associated with a single device identifier.
